# EUROPEAN PATENT SPECIFICATION

(11) **EP 2 566 342 B1**
(45) Date of publication and mention of the grant of the patent: **19.03.2014**
(21) Application number: 11729784.6
(22) Date of filing: 06.05.2011
(51) Int. Cl.: A23F 5/36, A23F 5/46

(54) **INSTANT POWDER FORM TURKISH COFFEE MIXTURE NOT REQUIRING COOKING AND ITS PRODUCTION METHOD**
INSTANTPULVERMISCHUNG FÜR TÜRKISCHEN KAFFE OHNE BRÜHVORGANG UND HERSTELLUNGSVERFAHREN
MÉLANGE POUR CAFÉ À LA TURQUE EN POUDRE INSTANTANÉ NE NÉCESSITANT PAS DE CUISSON ET PROCÉDÉ POUR LE FABRIQUER

(30) Priority: 07.05.2010 TR 201003640
(43) Date of publication of application: 13.03.2013
(73) Proprietor: Shems Gida Sanayi Ve Ticaret Limited Sirketi, 83412 Gaziantep (TR)
(72) Inventor: HARBALIOGLU, Hakki, Gaziantep (TR)
(74) Representative: Iskender, Ibrahim
(86) International application number: PCT/TR2011/000141
(87) International publication number: WO 2011/139257

(56) References cited:
- EP-A1- 1 135 992
- WO-A1-2007/116350
- WO-A2-2008/068225
- FR-A1- 2 211 184
- US-A- 2 588 922

## Description

### THE RELATED ART

The invention relates to Turkish coffee, which is a well known and traditional drink in the food sector.

The present invention particularly relates to the method of obtaining ready-made Turkish coffee without using traditional preparing method and by only adding hot water in homes, offices, cafes, restaurants, hotels, and air-sea-land journeys, and relates to the Turkish coffee product obtained by using this method.

### THE PRIOR ART

Turkish coffee is the name of the coffee preparation and cooking method invented by Turkish people. It has a special taste, foam, smell, cooking, and peculiar identity and tradition due to its way of offering. It is the only type of coffee offered with its coffee grounds. Its properties can be listed as below:
- It is the oldest way of cooking coffee in the world.
- It is formed of foam, coffee, and coffee grounds.
- It is the coffee type, the taste of which maintains on palate for the longest time thanks to its soft and velvety foam.
- It can remain hot thanks to this tasty foam which can remain undeformed for a few minutes.
- Since it is offered in thin edged coffee cup, it cools slower than other coffee types and thus provides a longer coffee delight.
- It sticks in mind by intensely stimulating the taste perceptions in the mouth via its dense and syrup-like consistency.
- It is more consistent, soft, and aromatic than other coffee types.
- It can easily be distinguished from other coffee types with the delightful smell and special foam peculiar to itself.
- It is accepted by the lovers as the only coffee that can be drunk by being cooked.
- It is the only type of coffee used for telling about future via coffee fortune-telling.
- It is unique because its coffee is in the cup; however, since it settles at the bottom as coffee grounds, it does not require filtration or draining.
- Since sugar is added during preparation, later on, adding sugar is not necessary contrary to other coffee types.
- It is healthy, because its coffee grounds accumulating at the bottom of the cup is not drunk.
- Although it is frequently drunk, it does not cause bloated feeling in the stomach because it is not excessive in amount.
- It contains less caffeine in one sip than other coffee types.
- It is the only type of coffee offered ready to drink, since its sugar is added during cooking according to preference.
- The previous tastes found in the mouth are removed by drinking water before coffee, and thus coffee taste is uniquely enjoyed.
- By having impact on the Turkish social life, Turkish coffee have become a symbol of friendship and become a ceremony subject of "asking for the girl in marriage".

Traditional Turkish coffee cooking method known in the prior art is as follows: Coffee cup is filled to the brim with cold drinking water and the water is poured into the coffee pot. Two tea spoons of roast coffee and arbitrarily 100-300 micron thickness ground coffee (which is approximately equal to 5 grams of coffee) are added to the coffee pot for each cup of coffee. Sugar is arbitrarily added (called as plain, middle, sugar). Coffee or the coffee and the sugar are thoroughly mixed at medium heat. Foam starts to form in about a minute. Foam is taken into the cup and the coffee is maintained to be cooked. The foam formed is taken into the cup repeatedly (3 times in average). Finally, the remaining coffee is cooked to come to the boil for once more and then poured into the cups. Therefore, it has a laborious method of preparation.

For centuries, Turkish coffee not having quick and practical consumption properties had difficulty in going beyond specific limits by being in the shadow of instant coffees in the world market due to its difficult preparation method. In other words, although it has better quality raw material properties than instant coffees, it has been kept in the background in the market due to its impractical preparation. When the desired ease of preparation and the taste standard is achieved, the consumption ratio of this tasty product may reach and even exceed the consumption ratio of instant coffee products in the Turkish and world market.

Since the instant coffee market have increased in 3 years from 2 thousand 500 hundred tons to 12 thousand tones, large companies are preparing to enter into the Turkish market with instant coffee products. Via the coffee chains opening one after another, the total share of the instant coffees among the 280 million TL coffee market have reached to 81 percent. In the market where Turkish coffee has declined down to 18 percent, the share of Cappuccino has reached to 2.8 percent. Last year, companies have reached the growth rate of 25 percent and Cappuccino reaching 8 million TL sales volume this year targets 10 million TL. Reasons of the decline of Turkish coffee in this market are: having the disadvantage of preparation time and impracticalness, difficulty of finding personnel to spare this time in coffee chains, and also tending of consumers towards other coffee types which are prepared in a quicker manner in convenience with the present day needs. When these problems are solved, a keen competition will be formed between instant coffees and instant Turkish coffee. When our fortune-telling culture is also considered, the number of people preferring instant Turkish coffee would increase. All of the markets wherein instant coffee is consumed are also potential markets for instant Turkish coffee. Turkish coffee, which can not be offered in buses, planes, fast food chains, and hotel rooms due to its way of preparation, will be able to obtain its share in these markets with its new face.

In the prior art, there are some applications for enrichment of the coffee used in the above disclosed Turkish coffee preparation with aromas and obtaining different tastes. Some of these are given below.

In the patent applications with no TR 2005 03614 and TR 2005 00808, Turkish coffee types having special mixtures are disclosed. This invention particularly relates to formation of Turkish coffee types with special mixtures in various tastes via addition of various vegetal ingredient substances into Turkish coffee having indispensable place in Turkish kitchen. In this way, various types such as gum mastic, coconut, cardamom, vanilla, and chocolate Turkish coffee are obtained.

However, the above disclosed applications have drawbacks. Classical way preparing of Turkish coffee is not practical and fast. Moreover, standard product quality would depend on the person since a taste and appearance is obtained according to the skill of the person cooking Turkish coffee. Therefore, it is not possible to achieve the same consistence every time.

Some of the present applications are studies made for aromatizing and/or foaming of instant coffee. One of these is the Russian patent with no RU2279227 C2 (EP1135992B1) and its purpose is to obtain the instant roasted and ground coffee drink on the surface of which foam is formed after addition of water. The coffee drink disclosed here comprises base having instant gas, instant coffee in the form of solid particles, and instant filling material. In this way, a coffee drink like espresso is obtained.

On the other hand, the method for preparing instant Turkish coffee and the patent application with no TR 2006 01696 disclosing the coffee prepared with this method are found in the prior art. The present invention relates to the instant Turkish coffee to be used in preparing traditional Turkish coffee with coffee grounds and foam without requiring addition of any other substance after addition of hot water on it.

However, the foaming agent sodium carbonate used in the product of the invention disclosed in this application causes the foam to have coffee grounds in undesired amounts and prevents formation of the original Turkish coffee foam appearance and taste (foam ingredient). The high amount of heat used in the instant coffee production process (spraying) may affect the oils of the coffee and thus ruin its natural aroma. Caffeine amount found in the instant coffee is generally much more than the Turkish coffee. Also, since it is a processed product, it is far from being a natural product such as Turkish coffee. In the light of these reasons, addition of instant coffee in the Turkish coffee estranges the product from Turkish coffee format. In fact, according to coffee lovers and experts, instant coffee is not considered as coffee. Although the word "coffee" is found in its name, it is actually a "drink with coffee". 3 of the 4 substances (instant coffee, coffee bleach, and sugar) used in the product disclosed in the patent application with no TR 2006 01696 form the powder drink mixture known as 3 in 1 in the market. Extra added foaming agent sodium carbonate can not give the Turkish coffee foam taste and forms only foam with coffee grounds (foam without coffee grounds is preferred).

As a result, the need for the coffee mixture providing the classical cooked Turkish coffee taste and structure and for its production method and the inadequacy of the present solutions have necessitated improvement in the related technical field.

### PURPOSE OF THE INVENTION

From the known status of the art, the purpose of the invention is to obtain a functional coffee mixture and a method for obtaining this mixture, which has the taste and structure properties of the classical Turkish coffee cooked by addition of water.

Another purpose of the invention is to develop a coffee mixture and a method for obtaining this coffee mixture, which provides saving from time, labour, and energy and thus quicker consumption of Turkish coffee.

Within this concept, another purpose of the invention is to increase the market share of Turkish coffee and facilitate its competition with foreign based instant coffees.

Another purpose of the invention is to eliminate the boiling operation and provide acceptable levels of the cafestol and kahweol found in the coffee bean (6-12 mg/cup) and found in relatively higher rates in boiled Turkish coffee as a result of boiling. Cafestol and kahweol in normal levels are anti-carcinogenic substances. However, when they are found in high rates, they increase the serum cholesterol level in human and thus cause atherosclerosis. The ratios of these components are kept lower since the coffee mixture of the invention is not boiled with water and their negative impacts on human health are decreased.

Another purpose of the invention is to obtain a coffee mixture providing the consumer to easily prepare tasty Turkish coffee himself/herself.

Another purpose of the invention is to facilitate its preparation only by addition of boiling water via the applications and adjustments to be made during the production process.

In order to achieve the above said purposes, the invention is the method for preparing Turkish coffee mixture in instant powder form not requiring cooking in the food sector, and it is characterized in that; it comprises the operation steps of:
- roasting of Arabica or Robusta coffee beans with classical method,
- blending of coffee beans with foaming agent just after the ending of roasting operation,
- resting of this blend for 10-30 minutes,
- grinding of the rested blend with classical method,
- re-grinding of the grinded mixture for 10 seconds in the grinding mixer,
- mixing of the grinded mixture for 5 seconds in another mixer,
- addition of foaming agent, powder coffee aroma, and thickener into the obtained mixture,
- mixing of this mixture in the mixer for 10 seconds, and
- packaging of the mixture quickly.

In order to achieve the above said purposes, the method of preparing instant powder form Turkish coffee mixture comprises the operation step of blending the coffee bean with stabilizer, skimmed milk powder, milk protein, vegetable oil emulsifier, and foaming agent comprising glucose just after the ending of roasting operation.

In order to achieve the above said purposes, the method of preparing instant powder form Turkish coffee mixture comprises the operation step of addition of Quillaja extract as the foaming agent after the grinding operation.

In order to achieve the above said purposes, the method of preparing instant powder form Turkish coffee mixture comprises the operation step of adding powder coffee aroma made of Arabica (coffee Arabica) or Robusta (coffee canephora) bean.

In order to achieve the above said purposes, the method of preparing instant powder form Turkish coffee mixture comprises the operation step of adding thickener substance in the form of individuals or combinations selected from the group consisting of gum arabic, xanthan gum, and guar gum.

In order to achieve the above said purposes, the method of preparing instant powder form Turkish coffee mixture comprises the operation step of adding sweetening agent together with the addition of foaming agent, powder coffee aroma, and thickener.

In order to achieve the above said purposes, the method of preparing instant powder form Turkish coffee mixture comprises the operation step of adding powder form aroma together with the addition of foaming agent, powder coffee aroma, and thickener.

In order to achieve the above said purposes, the method of preparing instant powder form Turkish coffee mixture comprises the operation step of adding alcohol within dissolvable balls together with the addition of foaming agent, powder coffee aroma, and thickener.

In order to achieve the above said purposes, instant powder form Turkish coffee mixture comprises 40-80% coffee bean by weight, 10-35% foaming agent by weight, 0,05-5% coffee aroma by weight, and 0,05-5% thickener by weight.

In order to achieve the above said purposes, instant powder form Turkish coffee mixture comprises 40-80% coffee bean by weight, 0-50% sweetening agent by weight, 10-35% foaming agent by weight, 0,05-5% coffee aroma by weight, 0,05-5% thickener by weight, 0,05-5% aroma by weight, and 0,05-10% alcohol balls by weight.

### DETAILED DESCRIPTION OF THE INVENTION

The instant Turkish coffee of the invention is in ready-to-use form and it comprises coffee bean, sweetening agent, foaming agent, powder coffee aroma, and thickener agent.

The said coffee bean is preferably Arabica (coffee Arabica), but the Robusta coffee (coffee canephora) bean can also be used.

The said sweetening agent is preferably table sugar (sucrose), but it can also be selected from the group consisting of fructose, galactose, glucose, maltose, sorbitol, and lactose.

Quillaja extract and Foamer M35 are used as the said foam maker agent. The quillaja extract (Quillaja ,Quillaia, Saponaria Extract Powder) obtained from Quillaja Saponaria Molina Tree and Foamer M35 (stabilizer E340, skimmed milk powder, milk protein, vegetable oil emulsifier, glucose) are used for forming foam appearance and original Turkish coffee foam ingredient. These raw materials give the appearance of Turkish coffee cooked with classical cooking method to the instant Turkish coffee and at the same time provide the original Turkish coffee foam appearance and taste.

At the end of roasting operation of coffee beans, the foamer M35 agent added before cooling of coffee beans absorbs the lipids found in the coffee in the ratio of 10-16% and provides the final product with the facility to achieve the original Turkish coffee foam quality in terms of foam ingredient and taste.

The said powder coffee aroma is Arabica (coffee Arabica) or Robusta coffee (coffee canephora) bean aroma. Arabica Turkish coffee powder aroma (obtained by extraction of Arabica coffee bean) provides different final product aroma and this aroma is the same with the original Turkish coffee aroma.

The said thickener agent is gum arabic or xanthan gum or guar gum. Gum arabic (Acacia gum purified and instantised) is purified and brought into dissolvable structure or xanthan gum (obtained by fermentation of glucose or sucrose sugar with Xanthomonas campestris bacteria) or guar gum (obtained by extraction of guar bean plant) substances provide obtaining original Turkish coffee consistence. Therefore, the final product consistence is different from its equals and it is in the original Turkish coffee consistence.

Except these, gum mastic, almond, Coconut, clove, mint, rose, caramel, milk etc. aromas and cognac, whiskey, vodka etc. alcohol or alcohol balls can be added. Product variety is obtained via gum mastic, almond, coconut, clove, mint, rose, caramel, and milk etc. aroma products and different product types are provided for consumers with different tastes. It is aimed to obtain different tastes by including cognac, vodka, whiskey etc. alcohols into the formulation in dry instant balls and include these types in the markets wherein alcoholic coffees are consumed.

Cafestol and kahweol are two components found in the coffee bean. They are known to increase the serum cholesterol level in human. The coffee components, cafestol and kahweol are responsible for this impact. Due to this explanation, boiled Turkish coffee, Scandinavian coffee, and French Press (cafetiere) coffee comprise relatively high ratio of cafestol and kahweol (6-12 mg/cup) and since in the product we produce, our product is not boiled itself and it directly contacts with the boiled water, the ratio of these components are in acceptable levels. Our product comprises low levels of cafestol and kahweol (0.2-0.6 mg/cup).

Below, a non-limiting example about the ingredient ratio by weight of the instant Turkish coffee presented within the context of the invention is given.

**Table-1: Ingredients of Powder Turkish coffee**

| **Ingredient** | | **Preferred Amount by Weight (%)** | **Usable Amount by Weight (%)** |
|---|---|---|---|
| Coffee bean | | 65 | 40-80 |
| Sweetening agent | | 18 | 0-50 |
| Foaming Quillaja extract agent | | 5 | 10-35 |
| | Foamer M35 (stabilizer E340, skimmed milk powder, milk protein, vegetable oil emulsfier, glucose) | 5 | 2-10 |
| Powder Coffee Aroma | | 3 | 0,05-5 |
| Thickener | | 2 | 0,05-5 |
| Aroma | | 1 | 0,05-5 |
| Alcohol Balls | | 1 | 0,05-10 |
| Total | | 100 | |

In order to obtain powder mixture form instant Turkish coffee having the ingredient ratio given in the above table; firstly the Arabica or Robusta coffee bean is roasted with the classical method.

After ending of the roasting operation, the coffee is blended with the Foamer M35 agent via wooden scoop and rested for 10-30 minutes. In this resting phase, the Foamer absorbs the lipids found within the coffee bean in the ratio of 10-16%. And this increases the quality of foam.

The obtained blend is firstly grinded with the classical method and it is re-grinded for 10 seconds in a special grinder mixer in the second step of grinding. This operation provides purification of the coffee powders with the foamer. In the said grinding machine, the number of knives and crushing systems vary in terms of operation time and number of revolutions for each raw material in order to prevent damaging of raw materials. The time of being processed in the mixer also vary according to the raw material structure.

Afterwards, homogeneous 5 seconds mixing is conducted by using different mixer apparatus. These operations are different from classical preparation methods of the product and they increase and change the quality of the final product ready to be consumed in terms of appearance and taste.

Quillaja extract, powder coffee aroma, Gum arabic (or xanthan gum or guar gum), and table sugar substances are added to the obtained mixture and a homogeneous mixture is obtained by mixing in the mixer for 10 seconds.

Aroma and alcohol balls are added into the mixer according to production preference and mixed for 5 seconds.

The Turkish coffee mixture having taken its final state is packaged in special packages without losing time and stored in packages.

In order to convert the powder mixture bought by consumers into the known Turkish coffee; first of all, the instant powder mixture is poured into a cup, then boiled hot water is added in 2/3 ratio and mixed thoroughly, and after mixing, the remaining 1/3 ratio boiled water is added into the cup and thus it becomes ready for drinking.

## Claims

1. Method of preparing Turkish coffee mixture in instant powder form not requiring cooking in the food sector, and it is **characterized in that**; it comprises the operation steps of:
- roasting of Arabica or Robusta coffee beans,
- blending of coffee beans with foaming agent just after the ending of roasting operation,
- resting of this blend for 10-30 minutes,
- grinding of the rested blend,
- re-grinding of the grinded mixture for about 10 seconds in the grinding mixer,
- mixing of the grinded mixture for about 5 seconds in another mixer,
- addition of foaming agent, powder coffee aroma, and thickener into the obtained mixture,
- mixing of this mixture in the mixer for about 10 seconds, and
- packaging of the mixture.

2. Method for preparing Turkish coffee mixture in instant powder form according to Claim 1, and it is **characterized in that**; it comprises the operation step of blending the coffee bean with stabilizer, skimmed milk powder, milk protein, vegetable oil emulsfier, and foaming agent comprising glucose just after the ending of roasting operation.

3. Method for preparing Turkish coffee mixture in instant powder form according to Claim 1, and it is **characterized in that**; it comprises the operation step of addition of Quillaja extract as the foaming agent after the grinding operation.

4. Method for preparing Turkish coffee mixture in instant powder form according to Claim 1, and it is **characterized in that**; it comprises the operation step of addition of powder coffee aroma made of Arabica (coffee Arabica) or Robusta (coffee canephora) bean or any combination of these.

5. Method for preparing Turkish coffee mixture in instant powder form according to Claim 1, and it is **characterized in that**; it comprises the operation step of adding thickener selected individually or in any combinations from the group consisting of gum arabic, xanthan gum, and guar gum.

6. Method for preparing Turkish coffee mixture in instant powder form according to Claim 1, and it is **characterized in that**; it comprises the operation step of adding sweetening agent together with the addition of foaming agent, powder coffee aroma, and thickener.

7. Method for preparing Turkish coffee mixture in instant powder form according to Claim 6, and it is **characterized in that**; it comprises the operation step of adding sweetener agent selected individually or in any combinations from the group consisting of table sugar (sucrose), fructose, galactose, glucose, maltose, sorbitol, and lactose.

8. Method for preparing Turkish coffee mixture in instant powder form according to Claim 1, and it is **characterized in that**; it comprises the operation step of adding aroma in powder form together with the addition of foaming agent, coffee aroma in powder form, and thickener.

9. Method for preparing Turkish coffee mixture in instant powder form according to Claim 8, and it is **characterized in that**; it comprises the operation step of adding aroma selected individually or in any combinations from the group consisting of gum mastic, almond, coconut, clove, mint, rose, caramel, and milk aromas.

10. **Method** for preparing Turkish coffee mixture in instant powder form according to Claim 1, and it is **characterized in that**; it comprises the operation step of adding alcohol within dissolvable balls together with the addition of foaming agent, powder coffee aroma, and thickener.

11. Method for preparing Turkish coffee mixture in instant powder form according to Claim 10, and it is **characterized in that**; it comprises the operation step of adding alcohol balls comprising alcohol selected from the group consisting of cognac, vodka, and whiskey.

12. It is the Turkish coffee mixture in powder form according to the above claims and it is **characterized in that**; it comprises 40-80% coffee bean by weight, 10-35% foaming agent by weight, 0.05-5% coffee aroma by weight, and 0.05-5% thickener by weight.

13. It is the Turkish coffee mixture in instant powder form according to the above claims and it is **characterized in that**; it comprises 40-80% coffee bean by weight, 0-50% sweetening agent by weight, 10-35% foaming agent by weight, 0.05-5% coffee aroma by weight, 0.05-5% thickener by weight, 0.05-5% aroma by weight, and 0.05-10% said alcohol balls by weight.

## Patentansprüche

1. Verfahren zum Zubereiten eines türkischen Kaffeegemischs in Löslichpulverform, die kein Kochen erfordert, im Nahrungsmittelbereich, und **dadurch gekennzeichnet ist, dass** es aus den folgenden Schritten besteht:
- Rösten von Arabica- oder Robusta-Kaffeebohnen,
- Mischen von Kaffeebohnen mit Schaummittel gleich nach dem Beenden des Röstvorgangs,
- Ruhenlassen dieses Gemischs während 10 bis 30 Minuten,
- Mahlen des ruhen gelassenen Gemischs
- erneutes Mahlen des gemahlenen Gemischs während etwa 10 Sekunden in dem Mahlmixer,
- Mischen des gemahlenen Gemischs während etwa 5 Sekunden in einem anderen Mixer,
- Hinzufügen von Schaummittel, von Pulverkaffeearoma und Verdickungsmittel in das erzielte Gemisch,
- Mischen dieses Gemischs in dem Mixer während etwa 10 Sekunden, und
- Verpacken des Gemischs.

2. Verfahren zum Zubereiten eines türkischen Kaffeegemischs in Löslichpulverform nach Anspruch 1, **dadurch gekennzeichnet, dass** es den Betriebsschritt des Mischens der Kaffeebohnen mit Stabilisator, Magermilchpulver, Milchprotein, Pflanzenölemulgator und Schaummittel, das Glukose enthält, unmittelbar nach dem Beenden des Röstvorgangs aufweist.

3. Verfahren zum Zubereiten eines türkischen Kaffeegemischs in Löslichpulverform nach Anspruch 1, **dadurch gekennzeichnet, dass** es den Betriebsschritt des Hinzufügens von Quillaja-Extrakt als Schaummittel nach dem Mahlvorgang aufweist.

4. Verfahren zum Zubereiten eines türkischen Kaffeegemischs in Löslichpulverform nach Anspruch 1, **dadurch gekennzeichnet, dass** es den Betriebsschritt des Hinzufügens von Pulverkaffeearoma, aufweist, das aus Kaffeebohnen aus Arabica (Arabica-Kaffee) oder Robusta (Canephora-Kaffee) oder aus irgendeiner Kombination dieser hergestellt ist.

5. Verfahren zum Zubereiten eines türkischen Kaffeegemischs in Löslichpulverform nach Anspruch 1, **dadurch gekennzeichnet, dass** es den Betriebsschritt des Hinzufügens von Verdickungsmittel aufweist, das einzeln oder in irgendeiner Kombination aus der Gruppe, die aus Gummiarabikum, Xanthangummi und Guarkernmehl besteht, ausgewählt ist.

6. Verfahren zum Zubereiten eines türkischen Kaffeegemischs in Löslichpulverform nach Anspruch 1, **dadurch gekennzeichnet, dass** es den Betriebsschritt des Hinzufügens von Süßstoff gemeinsam mit dem Hinzufügen von Schaummittel, Pulverkaffeearoma und Verdickungsmittel aufweist.

7. Verfahren zum Zubereiten eines türkischen Kaffeegemischs in Löslichpulverform nach Anspruch 6, **dadurch gekennzeichnet, dass** es den Betriebsschritt des Hinzufügens von Süßstoff aufweist, der einzeln oder in irgendeiner Kombination aus der Gruppe ausgewählt ist, die aus herkömmlichem Zucker (Saccharose), Fruktose, Galaktose, Glukose, Maltose, Sorbitol und Laktose besteht.

8. Verfahren zum Zubereiten eines türkischen Kaffeegemischs in nach Anspruch 1, **dadurch gekennzeichnet, dass** es den Betriebsschritt des Hinzufügens von Aroma in Pulverform gemeinsam mit dem Hinzufügen von Schaummittel, Kaffeearoma in Pulverform und Verdickungsmittel aufweist.

9. Verfahren zum Zubereiten eines türkischen Kaffeegemischs in Löslichpulverform nach Anspruch 8, **dadurch gekennzeichnet, dass** es den Betriebsschritt des Hinzufügens von Aroma aufweist, das einzeln oder in irgendeiner Kombination aus der Gruppe ausgewählt ist, die aus Mastix, Mandel, Kokosnuss, Gewürznelke, Minze, Rose, Karamell und Milcharomen besteht.

10. Verfahren zum Zubereiten eines türkischen Kaffeegemischs in Löslichpulverform nach Anspruch 1, **dadurch gekennzeichnet, dass** es den Betriebsschritt des Hinzufügens von Alkohol innerhalb löslicher Kugeln gemeinsam mit dem Hinzufügen von Schaummittel, Pulverkaffeearoma und Verdickungsmittel aufweist.

11. Verfahren zum Zubereiten eines türkischen Kaffeegemischs in Löslichpulverform nach Anspruch 10, **dadurch gekennzeichnet, dass** es den Betriebsschritt des Hinzufügens von Alkoholkugeln aufweist, die Alkohol enthalten, der aus der Gruppe ausgewählt ist, die aus Cognac, Wodka und Whiskey besteht.

12. Kaffeegemisch für türkischen Kaffee in Pulverform nach den oben stehenden Ansprüchen, **dadurch gekennzeichnet, dass** es 40 bis 80 Gew.-% Kaffeebohnen, 10 bis 35 Gew.- % Schaummittel, 0,05 bis 5 Gew.-% ein Kaffeearoma und 0,05 bis 5 Gew.-% Verdickungsmittel aufweist.

13. Kaffeegemisch für türkischen Kaffee in Pulverform nach den oben stehenden Ansprüchen, **dadurch gekennzeichnet, dass** es 40 bis 80 Gew.-% Kaffeebohnen, 0-50 Gew.-% Süßstoff, 10 bis 35 Gew.-% Schaummittel, 0,05 bis 5 Gew.-% Kaffeearoma, 0,05 bis 5 Gew.-% Verdickungsmittel, 0,05 bis 5 Gew.-% Aroma und 0,05 bis 10 Gew.-% Alkoholkugeln aufweist.

## Revendications

1. Procédé de préparation d'un mélange de café turc sous forme de poudre instantanée ne nécessitant pas de cuisson dans le secteur alimentaire, **caractérisé en ce qu'**il comprend les étapes opératoires suivantes consistant à :
- torréfier des grains de café Arabica ou Robusta,
- mélanger les grains de café à un agent moussant juste après la fin de l'opération de torréfaction,
- laisser reposer le mélange pendant 10 à 30 minutes,
- moudre le mélange ayant reposé,
- re-moudre le mélange moulu pendant environ 10 secondes dans le moulin à café mixeur,
- mixer le mélange moulu pendant environ 5 secondes dans un autre mixeur,
- ajouter un agent moussant, de l'arôme café en poudre et un épaississant dans le mélange obtenu,
- mélanger ce mélange dans le mixeur pendant environ 10 secondes et
- conditionner le mélange.

2. Procédé de préparation d'un mélange de café turc sous forme de poudre instantanée selon la revendication 1, **caractérisé en ce qu'**il comprend l'étape opératoire consistant à mélanger les grains de café avec un agent stabilisant, de la poudre de lait écrémé, des protéines de lait, de l'huile végétale émulsifiante et un agent moussant contenant du glucose juste après la fin de l'opération de torréfaction.

3. Procédé de préparation d'un mélange de café turc sous forme de poudre instantanée selon la revendication 1, **caractérisé en ce qu'**il comprend l'étape opératoire consistant à ajouter de l'extrait de quillaja comme agent moussant après l'opération de torréfaction.

4. Procédé de préparation d'un mélange de café turc sous forme de poudre instantanée selon la revendication 1, **caractérisé en ce qu'**il comprend l'étape opératoire consistant à ajouter de l'arôme café en poudre à base de grains d'Arabica (café Arabica) ou de Robusta (café canephora) ou toutes leurs combinaisons.

5. Procédé de préparation d'un mélange de café turc sous forme de poudre instantanée selon la revendication 1, **caractérisé en ce qu'**il comprend l'étape opératoire consistant à ajouter de l'épaississant sélectionné individuellement ou en toutes combinaisons dans le groupe consistant en gomme arabique, gomme de xanthane et gomme de guar.

6. Procédé de préparation d'un mélange de café turc sous forme de poudre instantanée selon la revendication 1, **caractérisé en ce qu'**il comprend l'étape opératoire consistant à ajouter de l'agent édulcorant au moment de l'ajout d'agent moussant d'arôme café en poudre et d'épaississant.

7. Procédé de préparation d'un mélange de café turc sous forme de poudre instantanée selon la revendication 1, **caractérisé en ce qu'**il comprend l'étape opératoire consistant à ajouter de l'agent édulcorant sélectionné individuellement ou en toutes combinaisons dans le groupe consistant en sucre de table (sucrose), fructose, galactose, glucose, maltose, sorbitol et lactose.

8. Procédé de préparation d'un mélange de café turc sous forme de poudre instantanée selon la revendication 1, **caractérisé en ce qu'**il comprend l'étape opératoire consistant à ajouter de l'arôme en poudre au moment de l'ajout d'agent moussant, d'arôme de café en poudre et d'épaississant.

9. Procédé de préparation d'un mélange de café turc sous forme de poudre instantanée selon la revendication 8, **caractérisé en ce qu'**il comprend l'étape opératoire consistant à ajouter de l'arôme sélectionné individuellement ou en toutes combinaisons dans le groupe consistant en arômes de gomme mastic, amande, noix de coco, clou de girofle, menthe, rose, caramel et lait.

10. Procédé de préparation d'un mélange de café turc sous forme de poudre instantanée selon la revendication 1, **caractérisé en ce qu'**il comprend l'étape opératoire consistant à ajouter de l'alcool dans des billes solubles au moment de l'ajout d'agent moussant, d'arôme café en poudre et d'épaississant.

11. Procédé de préparation d'un mélange de café turc sous forme de poudre instantanée selon la revendication 10, **caractérisé en ce qu'**il comprend l'étape opératoire consistant à ajouter des billes d'alcool contenant de l'alcool sélectionné dans le groupe composé de cognac, vodka et whisky.

12. C'est le mélange de café turc sous forme de poudre instantanée selon les revendications précédentes et il est **caractérisé en ce : qu'**il comprend 40 à 80 % en poids de grains de café, 10 à 35 % en poids d'agent moussant, 0,05 à 5 % en poids d'arôme de café et 0,05 à 5 % en poids d'épaississant.

13. C'est le mélange de café turc sous forme de poudre instantanée selon les revendications précédentes et il est **caractérisé en ce : qu'**il comprend 40 à 80 % en poids de grains de café, 0 à 50 % en poids d'agent édulcorant, 10 à 35 % en poids d'agent moussant, 0,05 à 5 % en poids d'arôme de café, 0,05 à 5 % en poids d'épaississant et 0,05 à 10 % en poids desdites billes d'alcool.
